# EUROPEAN PATENT SPECIFICATION

(11) **EP 2 117 272 B1**
(45) Date of publication and mention of the grant of the patent: **27.09.2017**
(21) Application number: 08171731.6
(22) Date of filing: 16.12.2008
(51) Int. Cl.: H04W 48/12, H04W 60/04

(54) **Base-station apparatus, mobile communication system, wireless communication method and computer program product**
Basisstationsvorrichtung, mobiles Kommunikationssystem, drahtloses Kommunikationsverfahren und Computerprogrammprodukt
Appareil de station de base, système de communication mobile, procédé de communication sans fil, et produit de programme informatique

(30) Priority: 07.05.2008 JP 2008121525
(43) Date of publication of application: 11.11.2009
(73) Proprietor: Fujitsu Limited, Kawasaki-shi, Kanagawa 211-8588 (JP)
(72) Inventor: Kawai, Hiromitsu, Kawasaki-shi, Kanagawa 211-8588 (JP); Kobayashi, Kazunari, Kawasaki-shi Kanagawa 211-8588 (JP)
(74) Representative: Fenlon, Christine Lesley

(56) References cited:
- WO-A1-95/08902
- NTT DOCOMO ET AL: "Solution Guideline for Registration in Densely-populated area (RED)", 20070827; 20070827 - 20070831 , vol. S2-073526, no. 59 27 August 2007 (2007-08-27), pages 1-4, XP002500754, Retrieved from the Internet: URL:http://www.3gpp.org/ftp/TSG_SA/WG2_Arc h/TSGS2_59_Helsinki/Docs [retrieved on 2008-10-17]
- NTT DOCOMO ET AL: "A way forward for registration in densely-populated area", 20070827; 20070827 - 20070831 , vol. S2-073525, no. 59 27 August 2007 (2007-08-27), pages 1-4, XP002500753, Retrieved from the Internet: URL:http://www.3gpp.org/ftp/TSG_SA/WG2_Arc h/TSGS2_59_Helsinki/Docs/ [retrieved on 2008-10-17]

## Description

### CROSS-REFERENCE TO RELATED APPLICATIONS

This application is based upon and claims the benefit of priority of the prior Japanese Patent Application No. 2008-121525, filed on May 7, 2008.

### BACKGROUND

### 1. Field

The present invention relates to a base-station apparatus, a mobile communication system, a wireless communication method, and a computer program product.

### 2. Description of the Related Art

In a mobile communication system providing call services and the like to mobile terminals, such as portable phones, a base-station apparatus serves as a direct calling partner of a mobile terminal.

Since a range (hereinafter, "cell") in which one base-station apparatus can wirelessly communicate with mobile terminals is limited, a plurality of base-station apparatuses are arranged to widen a mobile range of the mobile terminals.

In the mobile communication system, the present position of each mobile terminal is managed for each area including a plurality of cells.

Specifically, an identifier of the area in which a mobile terminal is located is registered in a database called a Home Location Register (HLR), and is used when, for example, incoming-call processing is performed on the mobile terminal.

Registering an area identifier in the HLR is referred to as position registration. The mobile terminal requests a base-station apparatus for position registration at a predetermined timing.

The timing when the mobile terminal requests for position registration is now explained. Generally, the base-station apparatus transmits, to the cell, notice information including the area identifier (see, for example, Japanese Laid-open Patent Publication No. 4-342322).

As a result, the mobile terminal receives the area identifier transmitted by the base-station apparatus which is currently a communication partner. When the mobile terminal moves between cells, the mobile terminal receives an area identifier from another base-station apparatus that becomes a new communication partner.

At this time, upon receiving an area identifier different from the previous one (going across areas), the mobile terminal requests the base-station apparatus for position registration at a timing after reception.

In this manner, in the mobile communication system, the mobile terminal requests for position registration at a predetermined timing.

Meanwhile, since mobile terminals move as being carried the user, a plurality of mobile terminals may move between areas approximately at the same time.

An example is that users carrying mobile terminals move by mass transportation such as a train.

At this time, a base-station apparatus positioned at a boundary of areas receives a plurality of requests for position registration approximately at the same time, thereby causing congestion.

In the event of congestion, the base-station apparatus cannot perform calling and receiving processes for mobile terminals for which position registration has failed and those that have been originally present in that cell. Frequent occurrence of such a situation would lead to a reduction in quality of service.

NTT DOCOMO et al, "Solution Guideline for Registration in Densely-populated area (RED)", vol. S2-073526, no. 59, 27 August 2007, pp 1-4, XP002500754, retrieved 17 October 2008, URL:http://www.3gpp.org/ftp/TSG SA/WG2 Arch/TSGS2 59 Helsinki/Docs, discloses a base-station apparatus which includes a communication unit that communicates with mobile terminals, a transmitting unit that transmits an area identifier, and a transmission controller that controls the transmitting unit to disperse the mobile terminals to a plurality of areas, and transmit to each of the mobile terminals an area identifier of an area to which the mobile terminal belongs.

### SUMMARY

It is desirable to at least partially solve the problems in the conventional technology.

The present invention is defined in the appended claims.

Advantages of embodiments of the present invention (embodiment) will be set forth in part in the description which follows, and in part will be apparent from the description, or may be learned by practice of the invention. Advantages of the invention may be realized and attained by means of the elements and combinations particularly pointed out in the appended claims.

It is to be understood that both the foregoing general description and the following detailed description are exemplary and explanatory only and are not restrictive of the invention, as claimed.

### BRIEF DESCRIPTION OF THE DRAWINGS

Fig. 1 is a schematic diagram for explaining features of a base-station apparatus according to a first embodiment;
Fig. 2 is a schematic diagram of a state in which a plurality of mobile terminals move between areas approximately at the same time;
Fig. 3 is a block diagram of the configuration of the base-station apparatus according to the first embodiment;
Fig. 4 is an example of information stored in a frequency management table;
Fig. 5 is an example of information stored in an area-identifier management table;
Fig. 6 is a sequence diagram for explaining the operation of each apparatus when a plurality of mobile terminals move between areas approximately at the same time;
Fig. 7 is a block diagram of a base-station apparatus in a mobile communication system according to a second embodiment;
Fig. 8 is an example of information stored in a unique-information-attached area-identifier storage unit;
Fig. 9 is a block diagram of a mobile terminal;
Fig. 10 is a flowchart of the operation of the mobile terminal; and
Fig. 11 is a block diagram of a computer that executes a wireless communication program.

### DETAILED DESCRIPTION OF THE PREFERRED EMBODIMENTS

Exemplary embodiments of the present invention are described in detail below with reference to the accompanying drawings.

First, position registration performed by mobile terminals, such as cellular phones, is briefly explained. In a mobile communication system providing call services and others to mobile terminals, each base-station apparatus serves as a direct calling partner.

In the mobile communication system, the base-station apparatus is caused to communication with mobile terminals within a predetermined range (hereinafter "cell"). An area is formed of a plurality of such cells, and is provided with an identifier.

Each of the mobile terminals is caused to register, in a database called a Home Location Register (HLR), an area identifier of an area where the mobile terminal is currently positioned.

A flow of registering an area identifier in the HLR is specifically explained. Each base-station apparatus always transmits notice information into the cells. The notice information contains an area identifier (the notice information also contains information about an upper network and others).

Therefore, each mobile terminal receives the area identifier transmitted from a base-station apparatus serving as a current communication partner.

When the mobile terminal moves between cells, it receives an area identifier transmitted from another base-station that becomes a new communication partner.

At this time, upon receiving an area identifier different from the previous one (going across areas), the mobile terminal requests the HLR via the base-station apparatus for registration of that area identifier.

Upon receiving the request, the HRL registers (updates) the area identifier of the mobile terminal in a predetermined management table. In the mobile communication system, with such area-identifier registration, the current position of each mobile terminal is managed, thereby achieving incoming-call processing for the mobile terminal.

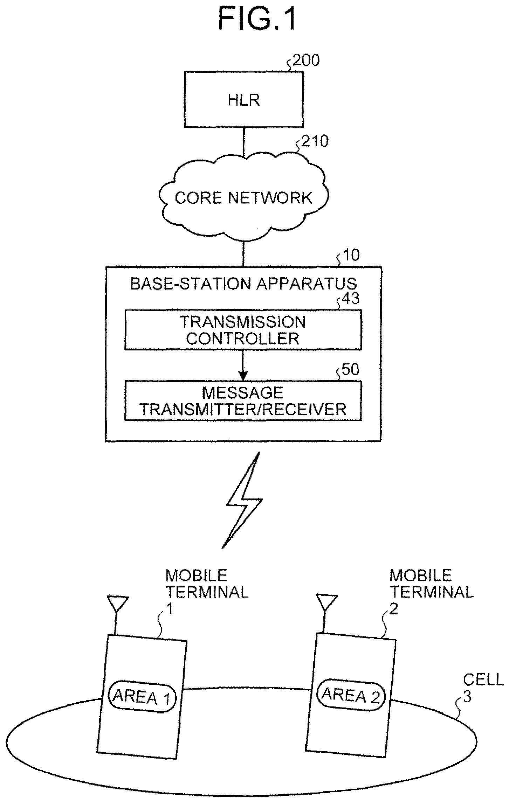

Described below is features of a base-station apparatus 10 according to the first embodiment. Fig. 1 is a schematic diagram for explaining features of the base-station apparatus 10.

As depicted in Fig. 1, the base-station apparatus 10 is connected to an HLR 200 via a core network 210 formed of a base-station controller, a switchboard and the like, thereby wirelessly communicating with mobile terminals 1 and 2 in a cell 3. The base-station apparatus 10 is connected to the core network 210 via a wire.

The base-station apparatus 10 includes a message transmitter/receiver 50 and a transmission controller 43.

The message transmitter/receiver 50 transmits an area identifier, as explained above, and also receives requests for call connection and position registration to be performed on its own apparatus by any mobile terminal in the cell.

Then, the transmission controller 43 controls the message transmitter/receiver 50 so that the message transmitter/receiver 50 transmits each different area identifier.

Thus, the base-station apparatus 10 transmits to the mobile terminal 1 an area identifier "1" and to the mobile terminal 2 an area identifier "2".

It is herein assumed that the mobile terminals 1 and 2 receive an area identifier "1" from a base-station apparatus being a previous communication partner.

In this case, when the mobile terminal 2 moves into the cell 3, the mobile terminal 2 requests the HLR 200 via the base-station apparatus 10 for registering the area identifier "2". On the other hand, the mobile terminal 1 does not request for position registration even upon moving into the cell 3.

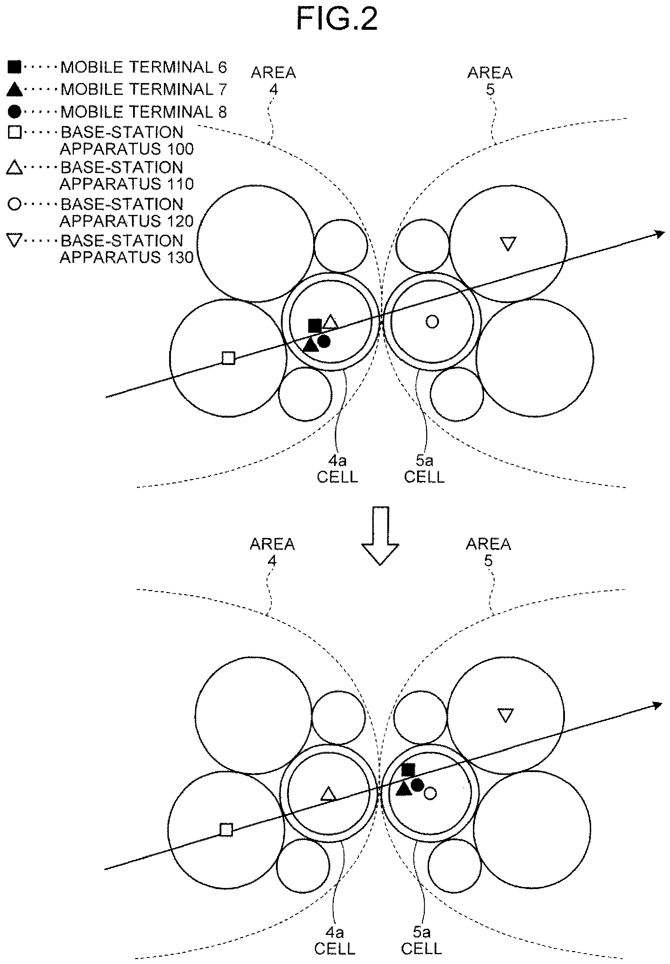

With the base-station apparatus 10 being placed at the boundary between the areas, it is possible to avoid a large number of occurrences of position registration within a short period of time. A concrete example is given below with reference to Fig. 2.

As depicted in Fig. 2, base-station apparatuses 110 and 120 having the same functions as the base-station apparatus 10 take charge of cells 4a and 5a each surrounded by a double line among cells included in areas 4 and 5,

Here, consider the case where mobile terminals 6 to 8 move together in a direction indicated by an arrow. Such a situation occurs when, for example, a plurality of users carrying the mobile terminals commute by a mass transportation system such as a train.

It is also assumed herein that the mobile terminals 6 to 8 receive an area identifier "4" when they are in any cell within the area 4 except the cell 4a, and receive an area identifier "5" when they are in any cell within the area 5 except the cell 5a.

As depicted in an upper part of Fig. 2, for the mobile terminals 6 to 8 coming into the cell 4a, the base-station apparatus 110 transmits an area identifier "5" to the mobile terminal 6, and transmits an area identifier "4" to the mobile terminals 7 and 8.

In this case, the mobile terminal 6 receives a different area identifier, and therefore requests the HLR via the base-station apparatus 110 for position registration.

Then, as depicted in a lower part of Fig. 2, for the mobile terminals 6 to 8 coming into the cell 5a, the base-station apparatus 120 transmits an area identifier "5" to the mobile terminals 6 and 7, and transmits an area identifier "4" to the mobile terminal 8.

In this case, the mobile terminal 7 receives a different area identifier, and therefore requests the HLR via the base-station apparatus 120 for position registration.

Then, upon passing through the cell 5a, the mobile terminals 6 to 8 receive an area identifier "5" from the base-station apparatus 130 in a cell adjacent to the cell 5a within the area 5.

In this case, the mobile terminal 8 receives a different identifier, and therefore requests the HLR via the base station apparatus 130 for position registration.

In this manner, even when the mobile terminals 6 to 8 move between the cells together, the mobile terminal 6 to 8 requests for position registration at different timings. Therefore, it is possible to avoid a large number of occurrences of position registration within a short period of time.

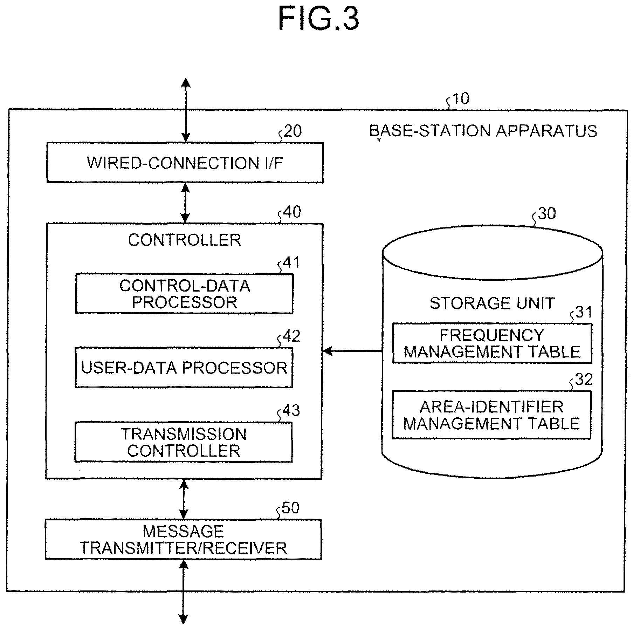

Next, the configuration of the base-station apparatus 10 according to the first embodiment is explained in detail. Fig. 3 is a block diagram of the base-station apparatus 10 according to the first embodiment. In the following explanation, it is assumed that a plurality of frequencies is used for wireless communication between the base-station apparatus 10 and mobile terminals. For example, a mobile terminal communicates with the base-station apparatus 10 at 100 megahertz, while another terminal communicates with the base-station apparatus 10 at 101 megahertz.

As depicted in Fig. 3, the base-station apparatus 10 includes a wired-connection interface (I/F) 20, a storage unit 30, a controller 40, and the message transmitter/receiver 50.

The wired-connection I/F 20 is an interface to the core network 210 depicted in Fig. 1.

The storage unit 30 stores data required for various processes by the controller 40. The storage unit 30 stores a frequency management table 31 and an area-identifier management table 32.

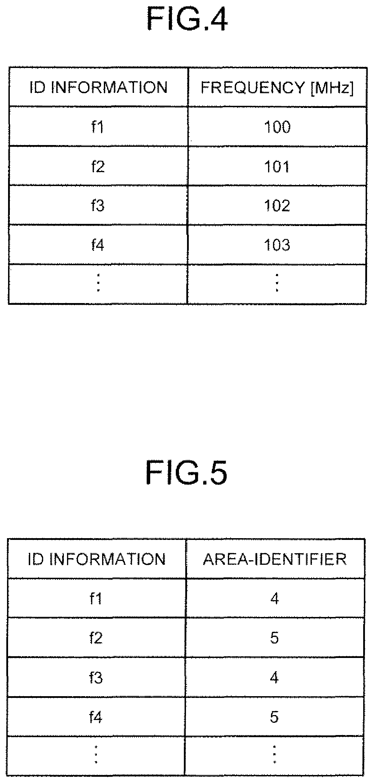

The frequency management table 31 stores information for managing frequencies for use in communication with mobile terminals. Specifically, as depicted in Fig. 4, the frequency management table 31 stores arbitrary ID information and a frequency in association with each other. For example, as depicted in Fig. 4, the frequency management table 31 stores ID information "f1" and a frequency "100" in association with each other.

The area-identifier management table 32 stores information for controlling the message transmitter/receiver 50 to determine which area identifier is to be transmitted by using which frequency. Specifically, as depicted in Fig. 5, the area-identifier management table 32 stores arbitrary ID information and an area identifier in association with each other. For example, as depicted in Fig. 5, the area-identifier management table 32 stores ID information of "f1" and an area identifier "4" in association with each other.

The controller 40 controls the base-station apparatus 10, and includes a control-data processor 41, a user-data processor 42, and the transmission controller 43.

The control-data processor 41 processes a control message for use at the time of occurrence of a failure in the mobile communication system and others.

The user-data processor 42 processes user data transmitted and received among users using services of the mobile communication system.

The transmission controller 43 controls the message transmitter/receiver 50 so that the message transmitter/receiver 50 transmits signals at the respective frequencies each indicating a unique area identifier.

Specifically, for example, the transmission controller 43 perform control based on the frequency management table 31 and the area-identifier management table 32 so that the message transmitter/receiver 50 transmits an area identifier "4" by using a frequency of 100 megahertz, and transmits an area identifier "5" by using a frequency of 101 megahertz.

The message transmitter/receiver 50 communicates with mobile terminals in the cell and transmits an area identifier.

Specifically, the message transmitter/receiver 50 is controlled by the transmission controller 43 and, for transmission of an area identifier, transmits signals at the respective frequencies each indicating a unique area identifier.

For example, the message transmitter/receiver 50 transmits an area identifier "4" by using a frequency of 100 megahertz, and transmits an area identifier "5" by using a frequency of 101 megahertz.

Here, as explained above, each mobile terminal uses a predetermined frequency for communication with the base-station apparatus 10.

Therefore, even in the same cell of the base-station apparatus 10, a mobile terminal using a frequency of 100 megahertz receives an area identifier "4", while a mobile terminal using a frequency of 101 megahertz receives an area identifier "5".

The message transmitter/receiver 50 receives requests for call connection and position registration to be performed on its own apparatus by any mobile terminal in the cell and outputs them to the controller 40.

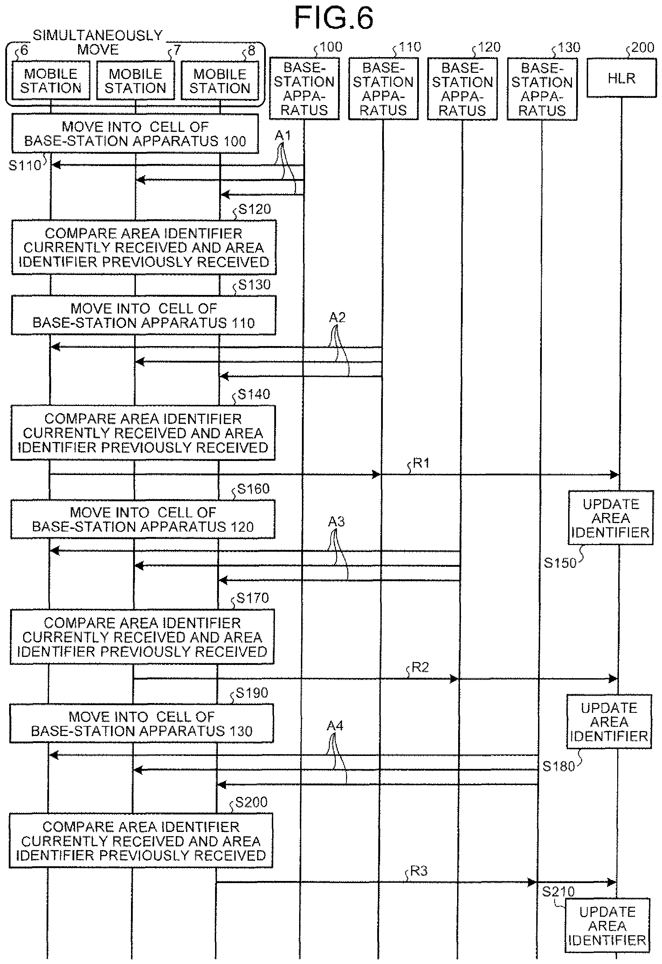

Finally, the operation of each apparatus under the circumstance explained with reference to Fig. 2 is explained with reference to Fig. 6.

It is assumed herein that the mobile terminal 6 uses a frequency of 100 megahertz, the mobile terminal 7 uses a frequency of 101 megahertz, the mobile terminal 8 uses a frequency of 102 megahertz.

It is also assumed herein that the base-station apparatus 110 transmits an identifier "5" at a frequency of 100 megahertz, and transmits an identifier "4" at frequencies of 101 and 102 megahertz.

It is further assumed herein that the base-station apparatus 120 transmits an identifier "5" at frequencies of 100 and 101 megahertz, and transmits an identifier "4" at a frequency of 102 megahertz.

First, when the mobile terminals 6 to 8 move into a cell of the base-station apparatus 100 (step S110), the base-station apparatus 100 transmits an area identifier "4" to the mobile terminals 6 to 8 (A1).

Then, the mobile terminals 6 to 8 compare the area identifier currently received and an area identifier previously received (step S120). It is assumed herein that these the mobile terminals 6 to 8 have also received the same area identifier "4" from a base-station apparatus being a previous communication partner.

Then, when the mobile terminals 6 to 8 move into a cell of the base-station apparatus 110 (step S130), the base-station apparatus 110 transmits an area identifier "5" to the mobile terminal 6, and transmits an area identifier "4" to the mobile terminals 7 and 8 (A2).

Then, the mobile terminals 6 to 8 compare the area identifier currently received and the area identifier previously received (step S140).

Here, since the area identifiers of the mobile terminal 6 are different from each other, the mobile terminal 6 requests the HLR 200 via the base-station apparatus 110 for position registration (R1).

Upon receiving the request for position registration, the HLR 200 updates the area identifier of the mobile terminal 6 (step S150).

Then, when the mobile terminals 6 to 8 move into a cell of the base-station apparatus 120 (step S160), the base-station apparatus 120 transmits an area identifier "5" to the mobile terminals 6 and 7 and transmits an area identifier "4" to the mobile terminal 8 (A3).

Then, the mobile terminals 6 to 8 compare the area identifier currently received and the area identifier previously received (step S170).

Here, since the area identifiers of the mobile terminal 7 are different from each other, the mobile terminal 7 requests the HLR 200 via the base-station apparatus 120 for position registration (R2).

Upon receiving the request for position registration, the HLR 200 updates the area identifier of the mobile terminal 7 (step S180).

Then, when the mobile terminals 6 to 8 move into a cell of the base-station apparatus 130 (step S190), the base-station apparatus 130 transmits an area identifier "5" to the mobile terminals 6 to 8 (A4).

Then, the mobile terminals 6 to 8 compare the area identifier currently received and the area identifier previously received (step S200).

Here, since the area identifiers of the mobile terminal 8 are different from each other, the mobile terminal 8 requests the HLR 200 via the base-station apparatus 130 for position registration (R3).

Upon receiving the request for position registration, the HLR 200 updates the area identifier of the mobile terminal 8 (step S210).

As explained above, according to the first embodiment, through transmission of different area identifiers, the timing when each mobile terminal goes across the areas is shifted. With this, it is possible to avoid a large number of occurrences of position registration within a short period of time.

As a result, it is possible to avoid the occurrence of a large number of requests for position registration exceeding the processing capability of the base-station apparatus. Therefore, congestion due to requests for position registration can be avoided.

Therefore, the base-station apparatus does not require any restriction on call processing for avoiding congestion. Thus, it is possible to avoid an increase in congestion which would otherwise occur because a mobile terminal that have originally been present and failed a position registration process, incoming and outgoing call processing, and other processes due to a restriction on these processes and tries to perform such them again.

Also, by avoiding a large number of requests for position registration exceeding the processing capability of the base-station apparatus, it is possible to avoid failures in incoming and outgoing processing and other processes performed by a mobile terminal originally inside the cell.

In the first embodiment, the base-station apparatus transmits signals at respective frequencies each indicating a unique area identifier. On the other hand, in a mobile communication system of a second embodiment, a plurality of area identifiers are collectively transmitted to each mobile terminal to allow the mobile terminal to select a unique area identifier.

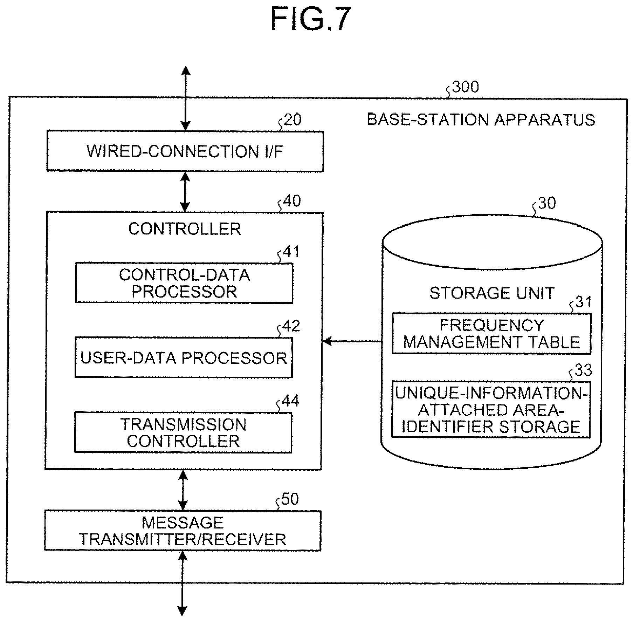

Fig. 7 is a block diagram of a base-station apparatus 300 in the mobile communication system according to the second embodiment. As depicted in Fig. 7, the base-station apparatus 300 includes the wired-connection I/F 20, the storage unit 30, the controller 40, and the message transmitter/receiver 50. The same or like parts as described in the first embodiment are identified by the same reference numerals, and their description is not repeated.

Differently from the first embodiment, the storage unit 30 includes a unique-information-attached area-identifier storage unit 33, and the controller 40 includes a transmission controller 44. Described below are the transmission controller 44, the transmission controller 44, and the message transmitter/receiver 50 controlled by the transmission controller 44.

The unique-information-attached area-identifier storage unit 33 stores information for controlling transmission of an area identifier performed by the message transmitter/receiver 50.

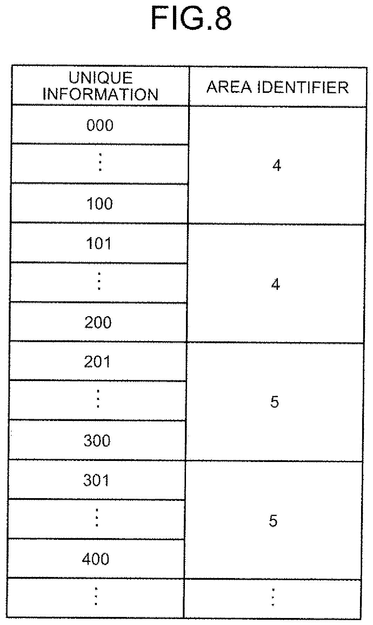

Specifically, as depicted in Fig. 8, the unique-information-attached area-identifier storage unit 33 stores unique information unique to each mobile terminal and an area identifier in association with each other.

For example, as depicted in Fig. 8, the unique-information-attached area-identifier storage unit 33 stores lower three digits "000" to "100" of an International Mobile Subscriber Identity (IMSI) assigned to the mobile terminal and an area identifier "4" in association with each other.

The transmission controller 44 controls the message transmitter/receiver 50 so that unique information owned by the mobile terminal is associated with each of a plurality of different area identifiers for transmission.

Specifically, for example, the transmission controller 44 performs control so that the message transmitter/receiver 50 transmits all unique-information-attached area identifiers in the information-attached area-identifier storage unit 33.

The message transmitter/receiver 50 communicates with mobile terminals in the cell and transmits an area identifier.

Specifically, the message transmitter/receiver 50 is controlled by the transmission controller 44 and, for transmission of an area identifier, transmits each of a plurality of different area identifiers associated with unique information owned by the mobile terminal. For example, the message transmitter/receiver 50 transmits all unique-information-attached area identifiers in a table depicted in Fig. 8.

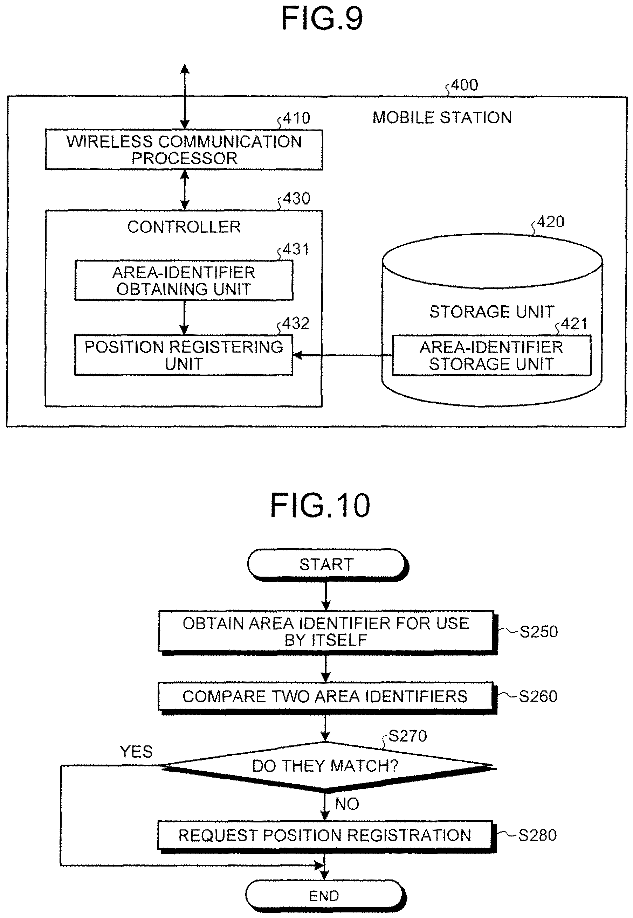

Described below is the configuration of a mobile terminal in the mobile communication system according to the second embodiment. Fig. 9 is a block diagram of a mobile terminal 400 according to the second embodiment. As depicted in Fig. 9, the mobile terminal 400 includes a wireless communication processor 410, a storage unit 420, and a controller 430.

The wireless communication processor 410 performs wireless communication with the base-station apparatus, outputting a signal received from the base-station apparatus to the controller 430 or transmitting a signal received from the controller 430 to the base-station apparatus.

Specifically, upon receiving all unique-information-attached area identifiers in the table as depicted in Fig. 8 transmitted from the base-station apparatus, the wireless communication processor 410 outputs these identifiers to the controller 430.

The storage unit 420 stores data required for various processing by the controller 430. The storage unit 420 includes an area-identifier storage unit 421.

In the area-identifier storage unit 421, an area identifier of the area where the mobile terminal is currently positioned.

The controller 430 controls the mobile terminal, and includes an area-identifier obtaining unit 431 and a position registering unit 432.

The area-identifier obtaining unit 431 selects and obtains an area identifier corresponding unique information owned by its own mobile terminal.

Specifically, upon receiving all unique-information attached area identifiers in the table as depicted in Fig. 8 from the wireless communication processor 410, the area-identifier obtaining unit 431 obtains an area identifier associated with lower three digits of the IMSI assigned to its own mobile terminal.

Then, the area-identifier obtaining unit 431 outputs the obtained area identifier to the position registering unit 432, described later.

When only receiving an area identifier from the wireless communication processor 410, the area-identifier obtaining unit 431 outputs the area identifier to the position registering unit 432.

The position registering unit 432 performs position registration upon receiving an area identifier different from an area identifier stored in the area-identifier storage unit 421.

Specifically, upon receiving an area identifier from the area-identifier obtaining unit 431, the position registering unit 432 refers to the area-identifier storage unit 421 for comparison between the received area identifier and the stored area identifier.

Then, when these area identifiers are different from each other, the position registering unit 432 performs position registration with the area identifier received from the area-identifier obtaining unit 431, and stores the area identifier in the area-identifier storage unit 421.

Next, the operation of the mobile terminal 400 is described with reference to Fig. 10. A flow depicted in Fig. 10 is repeated every time all unique-information-attached area identifiers in the table as depicted in Fig. 8 are received from the base-station apparatus 300.

First, the mobile terminal 400 obtains an area identifier for use by itself using unique information (step S250), and then comparisons it with the area identifier stored in the area-identifier storage unit 421 (step S260).

Then, if these area identifiers mismatch (No at step S270), the mobile terminal 400 requests the HLR via the base-station apparatus 300 for position registration (step S280), and the process ends.

With the base-station apparatus 300 and the mobile terminal 400, it is possible to avoid a large number of occurrences of position registration within a short period of time. Referring back to Fig. 2, a specific description is given.

As depicted in Fig. 2, the base-station apparatuses 110 and 120 having functions similar to those of the base-station apparatus 300 take in charge of the cells 4a and 5a each surrounded by a double line among cells included in areas 4 and 5.

It is assumed herein that the mobile terminals 6 to 8 move together in a direction indicated by the arrow.

It is also assumed herein that the mobile terminals 6 to 8 receive an area identifier "4" when they are in any cell within the area 4 except the cell 4a, and receive an area identifier "5" when they are in any cell within the area 5 except the cell 5a.

As depicted in the upper part of Fig. 2, the base-station apparatus 110 transmits, to the mobile terminals 6 to 8 moving into the cell 4a, all unique-information-attached area identifiers in the table as depicted in Fig. 8.

Of all unique-information-attached area identifiers, it is preferable that one third of them represent area identification information of "5", while the rest represent area identification information of "4".

For example, when the unique information of the mobile terminal 6 corresponds to area identification information of "5", the mobile terminal 6 obtains the area identification information of "5", and requests the HLR via the base-station apparatus 110 for position registration.

Then, as depicted in the lower part of Fig. 2, the base-station apparatus 120 transmits all unique-information-attached area identifiers in the table as depicted in Fig. 8 to the mobile terminals 6 to 8 moving into the cell 5a.

Of all unique-information-attached area identifiers, it is preferable that two third of them represent area identification information of "5" and the rest represent area identification information of "4". It is also preferable that half of the area identification information of "5" represent unique-information-attached area identifiers transmitted by the base-station apparatus 110.

For example, when the mobile terminal 7 obtains area identification information of "5" from the information itself, the mobile terminal 7 requests the HLR via the base-station apparatus 120 for position registration.

Then, upon passing through the cell 5a, the mobile terminals 6 to 8 receives an area identifier "5" from the base-station apparatus 130 in a cell adjacent to the cell 5a within the area 5.

Therefore, the mobile terminal 8 receives a different area identifier, and requests the HLR via the base-station apparatus 130 for position registration.

As explained above, according to the second embodiment, a plurality of area identifiers are collectively transmitted to each mobile terminal, thereby causing each mobile terminal to select a unique area identifier. As a result, the timing when each mobile terminal goes across the areas is shifted. With this, it is possible to avoid a large number of occurrences of position registration within a short period of time.

As a result, it is possible to avoid the occurrence of a large number of requests for position registration exceeding the processing capability of the base-station apparatus. Therefore, congestion due to requests for position registration can be avoided.

Therefore, the base-station apparatus does not require any restriction on call processing for avoiding congestion. Thus, it is possible to avoid an increase in congestion which would otherwise occur because a mobile terminal that have originally been present and failed a position registration process, incoming and outgoing call processing, and other processes due to a restriction on these processes and tries to perform such them again.

Moreover, because of no occurrence of a large number of requests for position registration exceeding the processing capability of the base-station apparatus. Thus, it is possible to avoid a failure of a process, such as incoming and outgoing call processing, by a mobile terminal that have originally been present in the cell.

Although the second embodiment recites that the area identifier is transmitted in association with IMSI, this is by way of example and not of limitation. Any information can be used that is unique to the mobile terminal, such as vendor information or a telephone number of the mobile terminal.

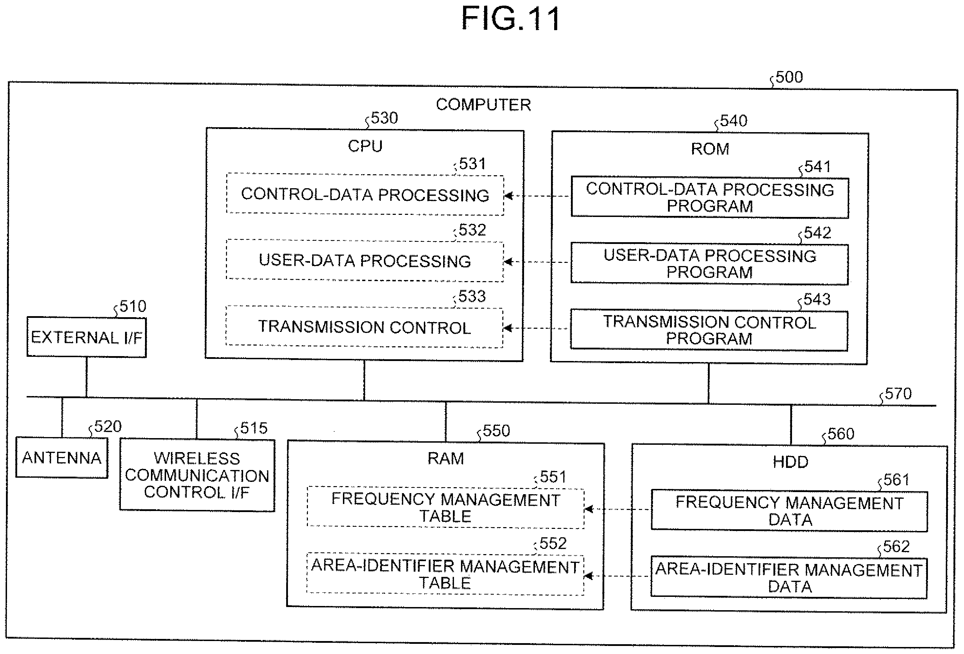

Various processes are explained above as being implemented by hardware logic. However, these processes may be implemented as software. In other words, a computer program (hereinafter, "tireless communication program") prepared in advance may be executed on a computer to realize the same function as the base-station apparatus 10. In the following, such a computer is described with reference to Fig. 11. Fig. 11 is a block diagram of a computer 500 that executes the wireless communication program.

As depicted in Fig. 11, the computer 500 includes an external I/F 510, a wireless communication control I/F 515, an antenna 520, a central processing unit (CPU) 530, a read only memory (ROM) 540, a random access memory (RAM) 550, and a hard disk drive (HDD) 560, which are connected via a bus 570.

The external I/F 510 corresponds to the wired-connection I/F 20 depicted Fig. 1, and the wireless communication control I/F 515 and the antenna 520 correspond to the message transmitter/receiver 50.

The ROM 540 previously stores therein a control-data processing program 541, a user-data processing program 542, and a transmission control program 543 that implement the same functions as the control-data processor 41, the user-data processor 42, and the transmission controller 43, respectively.

The CPU 530 reads and executes the control-data processing program 541, the user-data processing program 542, and the transmission control program 543 to implement these functions. In other wards, the CPU 530 reads the control-data processing program 541, the user-data processing program 542, and the transmission control program 543 from the ROM 540 to perform control-data processing 531, user-data processing 532, and transmission control 533, respectively, thereby operating in a similar manner to the control-data processor 41.

As depicted in Fig. 11, the HDD 560 stores frequency management data 561 and area-identifier management data 562. The frequency management data 561 and the area-identifier management data 562 are loaded by the CPU 530 into the RAM 550, and implement a frequency management table 551 and an area-identifier management table 552 corresponding to the frequency management table 31 and the area-identifier management table 32 depicted in Fig. 3.

The control-data processing program 541, the user-data processing program 542, and the transmission control program 543 need not necessarily stored in the ROM 540. For example, each of the programs may be stored, for example, in a portable physical medium, such as a flexible disk (FD), a compact-disk read only memory (CD-ROM), a digital versatile disk (DVD) disk, a magneto-optical disk, or an integrated circuit (IC) card. Each of the programs may also be stored in a fixed physical medium, such as an HDD provided inside or outside the computer 500, or in another computer (or a server) connected to the computer 500 via a public line, the Internet, a local-area network (LAN), or wide-area network (WAN), and then may be read by the computer 500 for execution.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

As set forth hereinabove, according to an embodiment, a cell belongs to a plurality of areas. As a result, when a plurality of mobile terminals belonging to the same area enter that cell, it is possible to cause some of them are recognized as remaining in the same area, and the others are recognized as being present in an area different from the previous area. Therefore, with the apparatus placed at the boundary between the areas, the timing of position registration can be varied. Thus, a large number of requests for position registration can be prevented from occurring approximately at the same time, and the occurrence of congestion can be suppressed.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention.

## Claims

1. A base-station apparatus (10) placed at a cell at the boundary of two areas, the apparatus comprising:
a communication unit (50) configured to: communicate with each of a plurality of mobile terminals (400) by using a predetermined frequency of a plurality of frequencies; receive from a mobile terminal (400) a request, when an area identifier stored previously at said mobile terminal (400) and a new area identifier received by said mobile terminal are different to each other, for registration of the newly-received area identifier and
a transmission controller (43) configured to: control the communication unit (50) to disperse a plurality of mobile terminals (400) entering said cell to said two areas by transmitting to each of the mobile terminals (400) an area identifier of one of the two areas when the plurality of mobile terminals (400) enters into said cell, wherein:
the transmission controller (43) is operable to control the communication unit (50) to transmit the area identifier of each one of the two areas by using one of said respective predetermined frequencies, each of the area identifiers being unique to each of the frequencies.

2. A mobile communication system comprising:
a mobile terminal (400); and
a base-station apparatus according to claim 1;
wherein the mobile terminal (400) includes an area-identifier obtaining unit (431) configured to obtain the unique area identifier associated with the frequency of the mobile terminal (400).

3. A mobile communication method executed by a base-station apparatus (10) placed at a cell at the boundary of two areas, the method comprising:
communicating with each of a plurality of mobile terminals (400) by using a predetermined frequency of a plurality of frequencies, and
controlling a communication unit (50) of the base-station apparatus to disperse a plurality of mobile terminals (400) entering said cell to said two areas by transmitting to each of the mobile terminals (400) an area identifier of one of the two areas when the plurality of mobile terminals (400) enter said cell; and
receiving from a mobile terminal (400) a request, when an area identifier stored previously at said mobile terminal (400) and a new area identifier received by said mobile terminal (400) are different to each other, for registration of the newly-received area identifier;
wherein:
the controlling includes controlling the communication unit (50) so as to transmit the area identifier of each one of the two areas by using one of said respective predetermined frequencies, each of the area identifiers being unique to each of the frequencies.

4. A computer program product comprising a computer usable medium having computer readable program codes embodied in the medium that, when executed, causes a computer to perform the method of claim 3.

## Patentansprüche

1. Basisstationsvorrichtung (10), an einer Zelle an der Grenze zwischen zwei Bereichen positioniert, wobei die Vorrichtung umfasst:
eine Kommunikationseinheit (50), die dafür konfiguriert ist: mit jeder einer Vielzahl mobiler Endgeräte (400) durch Verwenden einer vorbestimmten Frequenz aus einer Vielzahl von Frequenzen zu kommunizieren;
Empfangen von einem mobilen Endgerät (400) einer Anforderung, wenn eine Bereichskennung,
die zuvor auf dem mobilen Endgerät (400) gespeichert wurde, und eine neue Bereichskennung,
die von dem mobilen Endgerät empfangen wurde, unterschiedlich voneinander sind, zur Registrierung der neu empfangenen Bereichskennung,
eine Übertragungssteuerung (43), die dafür konfiguriert ist: die Kommunikationseinheit (50) zu steuern, um eine Vielzahl von mobilen Endgeräten (400), die in die Zelle eintreten, zu den beiden Bereichen durch Übertragen an jedes der mobilen Endgeräte (400) einer Bereichskennung von einem der beiden Bereiche zu zerstreuen, wenn die Vielzahl von mobilen Endgeräten (400) in die Zelle eintreten, worin:
die Übertragungssteuerung (43) dazu betriebsfähig ist, die Kommunikationseinheit (50) zum Übertragen der Bereichskennung jedes einzelnen der beiden Bereiche durch Verwenden einer der jeweiligen vorbestimmten Frequenzen zu steuern, wobei jede der Bereichskennungen eindeutig für jede der Frequenzen ist.

2. Mobiles Kommunikationssystem umfassend: ein mobiles Endgerät (400); und
eine Basisstationsvorrichtung nach Anspruch 1;
worin das mobile Endgerät (400) eine Bereichskennungserhalteeinheit (431) enthält, die dafür konfiguriert ist, die eindeutige Bereichskennung, die der Frequenz des mobilen Endgeräts (400) zugeordnet ist, zu erhalten.

3. Mobiles Kommunikationsverfahren, das von einer Basisstationsvorrichtung (10), die an einer Zelle an der Grenze von zwei Bereichen positioniert ist, ausgeführt wird, wobei das Verfahren umfasst:
Kommunizieren mit jeder von einer Vielzahl von mobilen Endgeräten (400) durch Verwenden einer vorbestimmten Frequenz von einer Vielzahl von Frequenzen, und
Steuern einer Kommunikationseinheit (50) der Basisstationsvorrichtung zum Verbreiten einer Vielzahl von mobilen Endgeräten (400), die in die Zelle eintreten, zu den beiden Bereichen durch Übertragen an jedes der mobilen Endgeräte (400) einer Bereichskennung von einem der beiden Bereiche, wenn die Vielzahl von mobilen Endgeräten (400) in die Zelle eintreten; und
Empfangen von einem mobilen Endgerät (400) einer Anforderung, wenn eine Bereichskennung,
die zuvor auf dem mobilen Endgerät (400) gespeichert wurde, und eine neue Bereichskennung,
die von dem mobilen Endgerät (400) empfangen wurde, unterschiedlich voneinander sind, zur Registrierung der neu empfangenen Bereichskennung; worin
das Steuern das Steuern der Kommunikationseinheit (50) zum Übertragen der Bereichskennung jeder einzelnen der beiden Bereiche durch Verwenden einer der jeweiligen vorbestimmten Frequenzen umfasst, wobei jede der Bereichskennungen eindeutig für jede der Frequenzen ist.

4. Computerprogrammprodukt, ein computernutzbares Medium umfassend, das computerlesbare Programmcodes enthält, die in dem Medium verkörpert sind, die, wenn sie ausgeführt werden, einen Computer veranlassen, das Verfahren nach Anspruch 3 auszuführen.

## Revendications

1. Appareil de station de base (10) placé au niveau d'une cellule à la limite de deux zones, l'appareil comprenant :
une unité de communication (50) configurée pour : communiquer avec chaque terminal d'une pluralité de terminaux mobiles (400) en utilisant une fréquence prédéterminée d'une pluralité de fréquences ; recevoir depuis un terminal mobile (400) une demande lorsqu'un identifiant de zone mémorisé au préalable dans ledit terminal mobile (400) et un nouvel identifiant de zone reçu par ledit terminal mobile sont différents l'un de l'autre, pour l'enregistrement d'un identifiant de zone nouvellement reçu et
un contrôleur de transmission (43) configuré pour : commander l'unité de communication (50) pour disperser une pluralité de terminaux mobiles (400) entrant dans ladite cellule vers lesdites deux zones par transmission à chacun des terminaux mobiles (400) d'un identifiant de zone d'une des deux zones lorsque la pluralité de terminaux mobiles (400) entrent dans ladite cellule, dans lequel :
le contrôleur de transmission (43) est opérationnel pour commander l'unité de communication (50) pour transmettre l'identifiant de zone de chacune des deux zones en utilisant une desdites fréquences respectives prédéterminées, chacun des identifiants de zone étant unique à chacune des fréquences.

2. Système de communication mobile comprenant :
un terminal mobile (400) ; et
un appareil de station de base selon la revendication 1 ;
dans lequel le terminal mobile (400) inclut une unité d'obtention d'identifiant de zone (431) configurée pour obtenir l'identifiant de zone unique associé à la fréquence du terminal mobile (400).

3. Procédé de communication mobile exécuté par un appareil de station de base (10) placé au niveau d'une cellule à la limite de deux zones, le procédé comprenant les étapes consistant à :
communiquer avec chaque terminal d'une pluralité de terminaux mobiles (400) en utilisant une fréquence prédéterminée d'une pluralité de fréquences,
commander une unité de communication (50) de l'appareil de station de base pour disperser une pluralité de terminaux mobiles (400) entrant dans ladite cellule vers lesdites deux zones par transmission à chacun des terminaux mobiles (400) d'un identifiant de zone d'une ou des deux zones lorsque la pluralité de terminaux mobiles (400) entrent dans ladite cellule ; et
recevoir à partir d'un terminal mobile (400) une demande, lorsque un identifiant de zone mémorisé au préalable dans ledit terminal mobile (400) et un nouvel identifiant de zone reçu par ledit terminal mobile (400) sont différents l'un de l'autre, pour l'enregistrement de l'identifiant de zone nouvellement reçu ;
dans lequel :
la commande inclut de commander l'unité de communication (50) afin de transmettre l'identifiant de zone de chacune des deux zones en utilisant une desdites fréquences respectives prédéterminées, chacun des identifiants de zone étant unique à chacune des fréquences.

4. Produit de programme informatique comprenant un support utilisable par ordinateur ayant des codes de programme lisibles par ordinateur incorporés dans le support qui, lorsqu'ils sont exécutés, amènent un ordinateur à effectuer le procédé selon la revendication 3.
